(19) Europäisches Patentamt
European Patent Office
Office européen des brevets

(11) EP 1 431 335 A1

(12) **EUROPEAN PATENT APPLICATION**
published in accordance with Art. 158(3) EPC

(43) Date of publication:
**23.06.2004 Bulletin 2004/26**

(21) Application number: **02798658.7**

(22) Date of filing: **03.09.2002**

(51) Int Cl.[7]: **C08J 5/00**, C08L 23/10, B29B 13/00

(86) International application number:
**PCT/JP2002/008909**

(87) International publication number:
**WO 2003/025047 (27.03.2003 Gazette 2003/13)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **12.09.2001 JP 2001276964**

(71) Applicant: **NEW JAPAN CHEMICAL CO.,LTD.**
**Kyoto-shi Kyoto 612-8224 (JP)**

(72) Inventors:
- **SADAMITSU, Kiyoshi**
  **Yawata-shi, Kyoto 614-8347 (JP)**
- **HOKI, Manabu**
  **Joyo-shi, Kyoto 610-0102 (JP)**
- **IKEDA, Naoki**
  **Soraku-gun, Kyoto 619-0225 (JP)**
- **OGINO, Koichi**
  **Takatsuki-shi, Osaka 569-0802 (JP)**

(74) Representative: **Barz, Peter**
**Patentanwalt**
**Kaiserplatz 2**
**80803 München (DE)**

(54) **POLYPROPYLENE RESIN MOLDINGS AND PROCESS FOR PRODUCTION THEREOF**

(57) The present invention provides a crystalline polypropylene-based resin molded article having an excellent impact resistance, in particular a remarkably high Izod impact strength, and a process for producing the molded article.

A polypropylene-based resin molded article with an excellent impact resistance in which the β crystals of the polypropylene-based resin are unoriented can be produced by a process comprising the steps of: adding 0.01 to 0.1 parts by weight of at least one amide compound to 100 parts by weight of a polypropylene-based resin; kneading the resulting mixture at a temperature not lower than the dissolution temperature of the amide compound in the molten polypropylene-based resin until the compound dissolves in the molten polypropylene-based resin; and injecting and/or extruding the resulting melt in such a state that the amide compound has dissolved in the molten polypropylene-based resin.

Fig.2

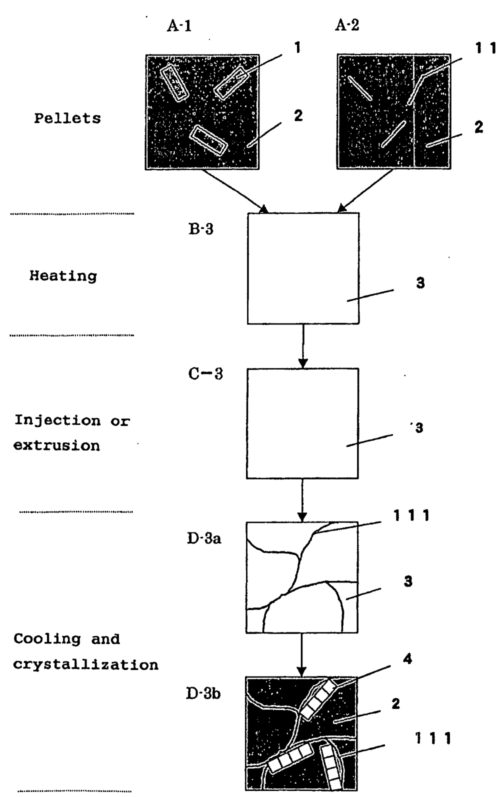


EP 1 431 335 A1

## Description

### TECHNICAL FIELD

The present invention relates to a crystalline polypropylene-based resin molded article having an excellent impact resistance, in particular, having a remarkably high Izod impact strength, and a process for producing the same.

### BACKGROUND ART

Crystalline polypropylene has been widely used in recent years in a variety of molding materials, owing to its excellent mechanical properties and high recyclability. Crystalline polypropylene has α, β and γ forms, and it is broadly known that the β form (hereinafter referred to as "β crystals") has interesting properties, such as a lower melting point, a higher heat distortion temperature, and a higher impact resistance, than the α crystals that are usually obtainable (Kobunshi Kagaku (Polymer Chemistry), 30, 694-698 (1978)).

Japanese Unexamined Patent Publication No. 1993-310665 proposes, as β crystal nucleating agents that preferentially produce β crystals, several amide compounds including N,N'-dicyclohexyl-2,6-naphthalenedicarboxamide. These amide compounds, when added to crystalline polypropylene, enable the production of polypropylene-based resin molded articles containing a large proportion of β crystals.

However, the molded articles thus obtained are liable to vary in characteristics, especially in impact resistance, and do not necessarily have satisfactory impact strength. Further, the results of impact tests also vary depending on the test method. Specifically, some of the molded articles exhibit a high impact resistance in a planar impact test, such as the DuPont impact test, but show a poor impact resistance in a linear impact test, such as the Charpy impact test or the Izod impact test. Therefore, the stabilization of the impact resistance characteristics has been strongly desired.

### DISCLOSURE OF THE INVENTION

An object of the present invention is to provide a crystalline propylene-based resin molded article free of the above problems and having an excellent impact resistance, in particular, having a remarkably high Izod impact strength, and a process for producing the molded article.

The present inventors carried out extensive research to achieve the above object. As a result, the inventors found that, when a crystalline polypropylene-based resin composition containing a specific proportion of a specific amide compound is molded under specific conditions, unoriented β crystals of the polypropylene-based resin are formed, thereby greatly improving the Izod impact value of the resulting molded article.

The present invention has been accomplished based on this finding, and provides the following crystalline polypropylene-based resin molded articles and processes for producing the molded articles.

1. A polypropylene-based resin molded article with an excellent impact resistance, obtained by molding a polypropylene-based resin composition containing 0.01 to 0.1 parts by weight of at least one amide compound represented by Formula (1) as a β crystal nucleating agent per 100 parts by weight of a polypropylene-based resin, the β crystals of the polypropylene-based resin being unoriented:

$$R^2\text{-NHCO-}R^1\text{-CONH-}R^3 \quad (1)$$

wherein $R^1$ is a $C_{1-24}$ saturated or unsaturated aliphatic dicarboxylic acid residue, a $C_{4-28}$ saturated or unsaturated alicyclic dicarboxylic acid residue, or a $C_{6-28}$ aromatic dicarboxylic acid residue; and $R^2$ and $R^3$ are the same or different and each represent a $C_{3-18}$ cycloalkyl group or a group represented by Formula (a), (b), (c) or (d):

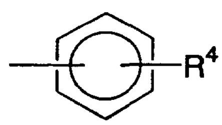 (a)

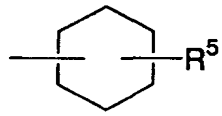 (b)

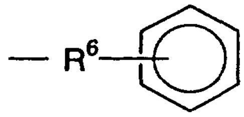 (c)

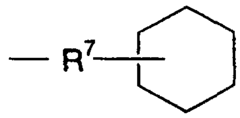 (d)

wherein $R^4$ is a hydrogen atom, a $C_{1-12}$ linear or branched alkyl group, a $C_{6-10}$ cycloalkyl group or a phenyl group; $R^5$ is a $C_{1-12}$ linear or branched alkyl group; and $R^6$ and $R^7$ are the same or different and each represent a $C_{1-4}$ linear or branched alkylene group.

2. A polypropylene-based resin molded article according to Item 1, wherein, in Formula (1), $R^1$ is a $C_{4-28}$ saturated or unsaturated alicyclic dicarboxylic acid residue or a $C_{6-28}$ aromatic dicarboxylic acid residue; and $R^2$ and $R^3$ are the same or different and each represent a $C_{3-18}$ cycloalkyl group or a group represented by Formula (a), (b), (c) or (d).

3. A polypropylene-based resin molded article according to Item 1, wherein, in Formula (1), $R^1$ is a $C_{6-28}$ aromatic dicarboxylic acid residue, and $R^2$ and $R^3$ are the same or different and each represent a $C_{3-18}$ cycloalkyl group or a group represented by Formula (b).

4. A polypropylene-based resin molded article according to Item 1, wherein the amide compound has a melting point of 200°C or higher.

5. A polypropylene-based resin molded article according to Item 1, wherein the amide compound is N,N'-dicyclohexyl-2,6-naphthalenedicarboxamide.

6. A polypropylene-based resin molded article according to Item 1, wherein, after transition of the β crystals in the molded article to α crystals by heat treatment, the diffraction peak intensities of the (110) and (040) crystal lattice planes in diffraction profiles of the heat-treated molded article measured in the THROUGH, EDGE and END directions by wide-angle X-ray diffractometry using an X-ray diffractometer satisfy the following equation (A):

$$0.8 \leq (I_{040,th}/I_{110,th}) \times (I_{040,ed}/I_{110,ed}) \times (I_{110,en}/I_{040,en}) \leq 1.2 \quad \text{(A)}$$

wherein $I_{040,th}$ and $I_{110,th}$ are the diffraction peak intensities of the (040) and (110) planes, respectively, in the diffraction profile in the THROUGH direction; $I_{040,ed}$ and $I_{110,ed}$ are the diffraction peak intensities of the (040) and (110) planes, respectively, in the diffraction profile in the EDGE direction; and $I_{110,en}$ and $I_{104,en}$ are the diffraction peak intensities of the (110) and (040) planes, respectively, in the diffraction profile in the END direction.

7. A process for producing a polypropylene-based resin molded article according to Item 1, comprising the steps of:

kneading a polypropylene-based resin composition containing 0.01 to 0.1 parts by weight of at least one amide compound represented by Formula (1) per 100 parts by weight of a polypropylene-based resin, at a temperature not lower than the dissolution temperature of the amide compound in the polypropylene-based resin in a molten state, until the amide compound dissolves in the molten polypropylene-based resin; and

molding the composition in such a state that the amide compound has dissolved in the molten polypropylene resin, by injection and/or extrusion.

Crystalline polypropylene-based resin

The crystalline polypropylene-based resin for use in the present invention is a propylene homopolymer or a copolymer comprising propylene as the main constituent. Specific examples include propylene homopolymers and

copolymers (including random and block copolymers) comprising propylene as the main comonomer and a $C_2$ or $C_{4-12}$ 1-alkene, such as ethylene, butene, pentene, hexene, heptene, octene, nonene, decene, undecene, or dodecene. Preferably, these copolymers have a propylene content of 70 wt.% or more, more preferably 80 wt.% or more but less than 100 wt.%.

Other examples include blend polymers comprising any of the above polypropylene-based resins (propylene homopolymers or copolymers comprising propylene as the main comonomer) and a small amount of a thermoplastic resin, such as high-density polyethylene, polybutene-1, or poly-4-methylpentene-1. These blend polymers preferably contain 30 wt.% or less, more preferably 20 wt.% or less, of the thermoplastic resin.

In the present invention, the amide compound exhibits higher β crystal nucleating effect on propylene homopolymers than on copolymers comprising propylene as the main comonomer or blend polymers.

The polypropylene-based resin can be produced by a known process. The catalyst for use in the production is not limited, but may be a catalyst system comprising an alkylaluminum compound (e.g., triethylaluminum or diethylaluminium chloride) and a catalyst composed of a titanium halide (e.g., titanium trichloride or titanium tetrachloride) supported on a carrier consisting mainly of a magnesium halide (e.g., magnesium chloride). Further, a metallocene catalyst called the Kaminsky catalyst can be used.

The melt flow rate (hereinafter referred to as "MFR", ASTM D1238) of the polypropylene-based resin can be suitably selected according to the molding method to be employed. The smaller the MFR of the polypropylene-based resin, the greater the impact resistance improving effect of the present invention. Usually, the MFR is about 0.01 to about 100 g/10 min, preferably about 0.01 to about 50 g/10 min, more preferably about 0.01 to about 10 g/10 min.

<u>β crystal nucleating agent</u>

The β crystal nucleating agent for use in the present invention is at least one amide compound represented by Formula (1)

$$R^2\text{-NHCO-}R^1\text{-CONH-}R^3 \qquad (1)$$

wherein $R^1$ is a $C_{1-24}$ saturated or unsaturated aliphatic dicarboxylic acid residue, a $C_{4-28}$ saturated or unsaturated alicyclic dicarboxylic acid residue, or a $C_{6-28}$ aromatic dicarboxylic acid residue; and $R^2$ and $R^3$ are the same or different and each represent a $C_{3-18}$ cycloalkyl group or a group represented by Formula (a), (b), (c) or (d):

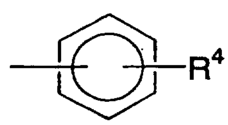
(a)

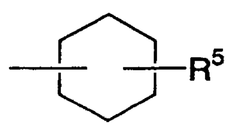
(b)

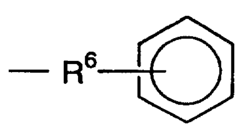
(c)

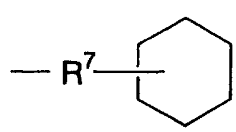
(d)

wherein $R^4$ is a hydrogen atom, a $C_{1-12}$ linear or branched alkyl group, a $C_{6-10}$ cycloalkyl group or a phenyl group; $R^5$

is a $C_{1-12}$ linear or branched alkyl group; and $R^6$ and $R^7$ are the same or different and each represent a $C_{1-4}$ linear or branched alkylene group.

In Formula (1), the aliphatic dicarboxylic acid residue is a residue obtained by removing two carboxyl groups from an aliphatic dicarboxylic acid. Examples of the aliphatic dicarboxylic acid include $C_{3-36}$, preferably $C_{3-14}$, saturated or unsaturated aliphatic dicarboxylic acids. More specific examples include malonic acid, diphenylmalonic acid, succinic acid, phenylsuccinic acid, diphenylsuccinic acid, glutaric acid, 3,3-dimethylglutaric acid, adipic acid, pimelic acid, suberic acid, azelaic acid, sebacic acid, 1,12-dodecanedioic acid, 1,14-tetradecanedioic acid, and 1,18-octadecanedioic acid.

In Formula (1), the alicyclic dicarboxylic acid residue is a residue obtained by removing two carboxyl groups from an alicyclic dicarboxylic acid. Examples of the alicyclic dicarboxylic acid include $C_{6-30}$, preferably $C_{8-12}$, alicyclic dicarboxylic acids. More specific examples include 1,2-cyclohexanedicarboxylic acid, 1,4-cyclohexanedicarboxylic acid, and 1,4-cyclohexanediacetic acid.

In Formula (1), the aromatic dicarboxylic acid residue is a residue obtained by removing two carboxyl groups from an aromatic dicarboxylic acid. Examples of the aromatic dicarboxylic acid include $C_{8-30}$, preferably $C_{8-22}$, aromatic dicarboxylic acids. More specific examples include aromatic dibasic acids, such as p-phenylenediacetic acid, p-phenylenediethanoic acid, phthalic acid, 4-tert-butylphthalic acid, isophthalic acid, 5-tert-butylisophthalic acid, terephthalic acid, 1,8-naphthalic acid, 1,4-naphthalenedicarboxylic acid, 2,6-naphthalenedicarboxylic acid, 2,7-naphthalenedicarboxylic acid, diphenic acid, 3,3'-biphenyldicarboxylic acid, 4,4'-biphenyldicarboxylic acid, 4,4'-binaphthyldicarboxylic acid, bis(3-carboxyphenyl)methane, bis(4-carboxyphenyl)methane, 2,2-bis(3-carboxyphenyl)propane, 2,2-bis(4-carboxyphenyl)propane, 3,3'-sulfonyldibenzoic acid, 4,4'-sulfonyldibenzoic acid, 3,3'-oxydibenzoic acid, 4,4'-oxydibenzoic acid, 3,3'-carbonyldibenzoic acid, 4,4'-carbonyldibenzoic acid, 3,3'-thiodibenzoic acid, 4,4'-thiodibenzoic acid, 4,4'-(p-phenylenedioxy)dibenzoic acid, 4,4'-isophthaloyldibenzoic acid, 4,4'-terephthaloyldibenzoic acid, and dithiosalicylic acid.

The amide compound of Formula (1) is obtained by the amidation reaction of any of the above dicarboxylic acids with an alicyclic monoamine and/or an aromatic monoamine performed by a known process, for example, the process described in Japanese Unexamined Patent Publication No. 1995-309821.

The alicyclic monoamine may be, for example, a $C_{3-18}$ cycloalkylamine, the compound represented by Formula (2)

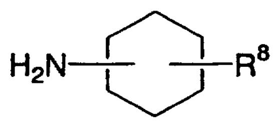 (2)

wherein $R^8$ has the same meaning as $R^5$, or the compound represented by Formula (3)

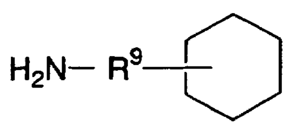 (3)

wherein $R^9$ has the same meaning as $R^7$. More specific examples include cyclopropylamine, cyclobutylamine, cyclopentylamine, cyclohexylamine, 2-methylcyclohexylamine, 3-methylcyclohexylamine, 4-methylcyclohexylamine, 2-ethylcyclohexylamine, 4-ethylcyclohexylamine, 2-propylcyclohexylamine, 2-isopropylcyclohexylamine, 4-propylcyclohexylamine, 4-isopropylcyclohexylamine, 2-tert-butylcyclohexylamine, 4-n-butylcyclohexylamine, 4-isobutylcyclohexylamine, 4-sec-butylcyclohexylamine, 4-tert-butylcyclohexylamine, 4-n-amylcyclohexylamine, 4-isoamylcyclohexylamine, 4-sec-amylcyclohexylamine, 4-tert-amylcyclohexylamine, 4-hexylcyclohexylamine, 4-heptylcyclohexylamine, 4-octylcyclohexylamine, 4-nonylcyclohexylamine, 4-decylcyclohexylamine, 4-undecylcyclohexylamine, 4-dodecylcyclohexylamine, 4-cyclohexylcyclohexylamine, 4-phenylcyclohexylamine, cycloheptylamine, cyclododecylamine, cyclohexylmethylamine, α-cyclohexylethylamine, β-cyclohexylethylamine, α-cyclohexylpropylamine, β-cyclohexylpropylamine, and γ-cyclohexylpropylamine.

The aromatic monoamine may be, for example, the compound represented by Formula (4)

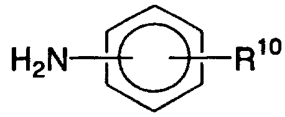 (4)

wherein $R^{10}$ has the same meaning as $R^4$, or the compound represented by Formula (5)

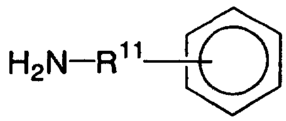 (5)

wherein $R^{11}$ has the same meaning as $R^6$. More specific examples include aniline, o-toluidine, m-toluidine, p-toluidine, o-ethylaniline, p-ethylaniline, o-propylaniline, m-propylaniline, p-propylaniline, o-cumidine, m-cumidine, p-cumidine, o-tert-butylaniline, p-n-butylaniline, p-isobutylaniline, p-sec-butylaniline, p-tert-butylaniline, p-n-amylaniline, p-isoamylaniline, p-sec-amylaniline, p-tert-amylaniline, p-hexylaniline, p-heptylaniline, p-octylaniline, p-nonylaniline, p-decylaniline, p-undecylaniline, p-dodecylaniline, p-cyclohexylaniline, o-aminodiphenyl, m-aminodiphenyl, p-aminodiphenyl, benzylamine, α-phenylethylamine, β-phenylethylamine, α-phenylpropylamine, β-phenylpropylamine, and γ-phenylpropylamine.

Among the amide compounds of Formula (1), preferred are those wherein $R^1$ is a $C_{4-28}$ saturated or unsaturated alicyclic dicarboxylic acid residue or a $C_{6-28}$ aromatic dicarboxylic acid residue, and $R^2$ and $R^3$ are the same or different and each represent a $C_{3-18}$ cycloalkyl group or a group represented by Formula (a), (b), (c) or (d).

Among the amide compounds of Formula (1), more preferred are those wherein $R^1$ is a $C_{6-10}$ saturated or unsaturated alicyclic dicarboxylic acid residue or a $C_{6-20}$ aromatic dicarboxylic acid residue, and $R^2$ and $R^3$ are the same or different and each represent a $C_{6-10}$ cycloalkyl group or a group represented by Formula (a), (b), (c) or (d) wherein $R^4$ is a hydrogen atom, a $C_{1-4}$ linear or branched alkyl group, a $C_{6-8}$ cycloalkyl group, or a phenyl group; $R^5$ is a $C_{1-4}$ linear or branched alkyl group; and $R^6$ and $R^7$ are the same or different and each represent a $C_{1-2}$ linear alkylene group.

Further preferred are amide compounds of Formula (1) wherein $R^1$ is a $C_{6-28}$ aromatic dicarboxylic acid residue, and $R^2$ and $R^3$ are the same or different and each represent a $C_{3-18}$ cycloalkyl group or a group represented by Formula (b).

It is advantageous to use an amide compound of Formula (1) that has a melting point of 200°C or higher, preferably 240°C or higher.

Preferred examples of amide compounds represented by Formula (1) include N,N'-dicyclohexyl-4,4'-biphenyldicarboxamide, N,N'-dicyclohexyl-2,6-naphthalenedicarboxamide, N,N'-dicyclohexylterephthalamide and the like. Among them, N,N'-dicyclohexyl-2,6-naphthalenedicarboxamide is particularly preferable.

In the present invention, it is necessary for the amide compound (β crystal nucleating agent) to be in a dissolved state in a molten polypropylene-based resin during molding. Therefore, to increase the dissolution rate, the particle size of the amide compound is preferably small, and is 20 μm or smaller, more preferably 10 μm or smaller, further more preferably 5 μm or smaller.

A recommended amount of the β crystal nucleating agent to be used in the present invention is 0.01 to 0.1 parts by weight, more preferably 0.02 to 0.08 parts by weight, further more preferably 0.04 to 0.06 parts by weight, per 100 parts by weight of the polypropylene-based resin. With less than 0.01 parts by weight of the nucleating agent, it is difficult to form a sufficient amount of β crystals, and the impact resistance improving effect is poor. On the other hand, use of more than 0.1 parts by weight of the nucleating agent greatly reduces the impact resistance value of the molded article, and thus is functionally and economically disadvantageous.

To achieve a sufficient impact resistance improving effect in the present invention, the amount of the amide compound to be used needs to be within a relatively narrow range of 0.01 to 0.1 parts by weight. When the amount is outside the above range, a sufficient impact resistance improving effect cannot be expected.

Other modifiers

In the polypropylene-based resin for use in the present invention, known polyolefin modifiers can be used according to the purpose and use, within the range that does not impair the effect of the present invention.

Examples of such polyolefin modifiers include various additives shown in Japan Hygienic Olefin And Styrene Plastics Association (ed.), "Handbook of Additives in Positive List: Revised Second Edition" (January, 1995). More specific examples include stabilizers (metal compounds, epoxy compounds, nitrogen compounds, phosphorus compounds, sulfur compounds, etc.), ultraviolet absorbers (benzophenone compounds, benzotriazole compounds, etc.), antioxidants (phenol compounds, phosphorous acid ester compounds, sulfur compounds, etc.), surfactants, lubricants (aliphatic hydrocarbons, such as paraffin and wax, $C_{8-22}$ higher fatty acids, metal (Al, Ca, Mg, or Zn) salts of $C_{8-22}$ higher fatty acids, $C_{8-18}$ fatty acids, $C_{8-22}$ aliphatic alcohols, polyglycols, esters of $C_{4-22}$ higher fatty acids with $C_{4-18}$ aliphatic monohydric alcohols, $C_{8-22}$ higher fatty acid amides, silicone oil, rosin derivatives, etc.), fillers (talc, hydrotalcite, mica, zeolite, perlite, diatomaceous earth, calcium carbonate, glass fibers, etc.), foaming agents, foaming auxiliaries, polymer additives, plasticizers, crosslinking agents, crosslinking accelerators, antistatic agents, neutralizers, antiblocking agents, anti-fogging agents, polymer alloy components (polystyrene and rubbers, such as block SBRs, random SBRs, and their hydrides, etc.), flame retardants, dispersants, organic or inorganic pigments or dyes, processing aids and other additives.

The β crystal nucleating agent represented by Formula (1) and polyolefin modifiers optionally used may be added to the polypropylene-based resin during or after preparation of the resin.

<u>Preparation of polypropylene-based resin composition</u>

The polypropylene-based resin composition of the present invention can be prepared by: dry-blending a mixture of the polypropylene-based resin, the amide compound as a β crystal nucleating agent, and optionally any of the modifiers mentioned above by a conventional method, for example, using a known mixer, such as a Henschel mixer, a tumbler mixer, a V-blender, a ribbon blender, or a Banbury mixer; melting and kneading the dry blend in a single- or twin-screw extruder or like equipment; and cooling and pelletizing the melt.

In the above process, the mixture is dry-blended usually at about room temperature to about 100°C, for about 1 to about 20 minutes, depending on the rotation velocity of the mixer or other factors. Further, the dry blend is melted and kneaded at 220 to 300°C, preferably 220 to 280°C, more preferably 240 to 260°C. A temperature lower than 220°C is undesirable because, at such a temperature, the amide compound shows poor dispersibility in the resin. A temperature higher than 300°C is also undesirable because, at such a temperature, the resin markedly deteriorates.

Even when the dry blend is melted and kneaded at a temperature lower than 220°C and the amide compound is poorly dispersed in the resin, the molded article of the present invention can be obtained without problems if, in the subsequent molding step, the amide compound in the resin composition is heated at a temperature not lower than the dissolution temperature of the compound and kneaded until complete dissolution is attained in the molten polypropylene-based resin.

Similarly, if the amide compound in the resin composition is to be heated at a temperature not lower than the dissolution temperature of the compound and kneaded until complete dissolution is attained in the molten polypropylene-based resin in the molding step, the polypropylene-based resin composition of the present invention may be a dry blend obtained by simply dry-blending the polypropylene-based resin and the amide compound, without melting and kneading it in a single- or twin-screw extruder or other equipment.

Further, when the dry blend is melted and kneaded for pelletization at a temperature not lower than the dissolution temperature of the amide compound in the molten polypropylene resin, and kneaded until the amide compound dissolves in the molten polypropylene-based resin and then cooled, the amide compound is recrystallized from columnar crystals to finer needle crystals. The needle crystals have the same dissolution temperature in the molten polypropylene-based resin as the columnar crystals, but since the needle crystals have a large specific surface area, their dissolution rate in the molten resin is faster than that of the columnar crystals. Accordingly, when the amide compound has been transformed into needle crystals in the kneading step, the compound rapidly dissolves in the molten polypropylene-based resin at a temperature not lower than the dissolution temperature of the amide compound, in the subsequent molding step. On the other hand, the columnar crystals have a slow dissolution rate, and therefore they are liable to remain undissolved even at a temperature not lower than the dissolution temperature of the amide compound and be incapable of satisfactorily improving the properties. In such a case, it is necessary to take measures such as extending the residence time of the molten polypropylene-based resin in the extruder, increasing the rotation frequency of the extruder screw, or increasing the resin temperature, in the molding step.

The amide compound content in the polypropylene-based resin composition thus obtained is not limited, but when the composition has an amide compound content within the preferable range according to the present invention (0.01 to 0.1 parts by weight), it can be directly subjected to the subsequent molding step, without dilution. On the other hand, when the composition is prepared as a high content masterbatch containing the amide compound in a proportion over the range according to the present invention, it is necessary to dilute the masterbatch with a separately prepared polypropylene-based resin to adjust the amide compound concentration in the whole composition to 0.01 to 0.1 parts by weight in the molding step.

The thus prepared resin composition for use in the present invention is a polypropylene-based resin composition containing the above-specified proportion of the amide compound represented by Formula (1), the composition being:

(a) pellets obtained by dry-blending the amide compound and the polypropylene-based resin and melting and kneading the dry blend in a single- or twin-screw extruder or similar equipment to completely dissolve the amide compound, followed by cooling and pelletization (the amide compound being recrystallized into needle crystals);
(b) pellets obtained by dry-blending the amide compound and the polypropylene-based resin and melting and kneading the dry blend in a single- or twin-screw extruder or similar equipment to partially dissolve the amide compound, followed by cooling and pelletization (the amide compound being mostly columnar crystals); or
(c) a dry blend of the amide compound (columnar crystals) and the polypropylene-based resin.

Among them, the pellets described in (a) are preferable.

Molding process

In the present invention, molding can be performed by any of a wide variety of molding methods having an injection and/or extrusion step, such as injection molding, extrusion molding, injection blow molding, injection extrusion blow molding, injection compression molding, extrusion blow molding and extrusion thermoforming.

In the molding process of the present invention, the resin composition is heated at a temperature not lower than the dissolution temperature of the amide compound in the molten polypropylene-based resin, while kneading the composition until the amide compound dissolves in the molten polypropylene-based resin, and subjected to an injection and/or extrusion step, in such a state that the amide compound has dissolved in the molten polypropylene-based resin. In this manner, an excellent impact resistance is imparted to the molded article.

The amide compound generally has a high melting point of about 180 to about 380°C, which is higher than the melting point of the polypropylene-based resin (generally about 130 to about 185°C). Thus, when the compound and the resin are heated together, the polypropylene-based resin melts first and then the amide compound dissolves in the molten polypropylene-based resin. When the melting points of the compound and the resin are close to each other, it is sometimes unclear whether the amide compound dissolves or melts.

Therefore, in this specification, the "dissolution temperature" of the amide compound of Formula (1) in the molten polypropylene-based resin is determined by heating the polypropylene-based resin composition (pellets or dry blend) containing the amide compound under optical microscope observation to find the temperature at which the amide compound dissolves and/or melts in the molten polypropylene-based resin so that the amide compound in a solid state is no longer observed.

Whether or not the amide compound has dissolved in the molten polypropylene-based resin can be easily determined as follows. In injection molding, the molten resin composition discharged from the nozzle tip of the heating cylinder is visually observed. The molten resin composition is turbid when the amide compound does not completely dissolve in the molten polypropylene-based resin and any amount of the compound remains in a solid state, whereas the molten composition is transparent when the compound completely dissolves and/or melts. Similarly, in extrusion molding, the transparency of the molten resin composition extruded from the die is visually observed to confirm whether the amide compound completely dissolves or not. Also in other molding methods, whether the compound completely dissolves or not can be confirmed by visually observing the transparency of the molten resin composition discharged from the cylinder nozzle or the die in the injection and/or extrusion step.

In contrast to the present invention, the molding processes proposed in Japanese Unexamined Patent Publications No. 1996-134227 and 1996-197640 relate to molding polypropylene-based resin pellets containing the crystals of amide compound at a temperature lower than the dissolution temperature of the amide compound, in order to improve the mechanical characteristics of the molded article. In these processes, although the modulus of elasticity in bending improves to some extent, the impact resistance tends to reduce, resulting in a brittle molded article. It is assumed that the molded article is brittle because the β crystal layer of the polypropylene-based resin is highly oriented, as shown in Japanese Unexamined Patent Publication No. 1996-197640.

These prior art processes will be explained below with reference to Fig. 1. First, polypropylene-based resin pellets (A-1) comprising columnar crystals 1 of the amide compound of Formula (1) and a solidified polypropylene-based resin 2, or polypropylene-based resin pellets (A-2) comprising needle crystals 11 of the amide compound and a solidified polypropylene-based resin 2 are heated and melted at a temperature not higher than the dissolution temperature of the amide compound in the molten polypropylene-based resin. Thus, the amide compound crystals 1 or 11 remain undissolved in the molten polypropylene-based resin 3 during heating (B-1, B-2), and are oriented in the molten polypropylene-based resin 3 by the flow occurring during molding, such as injection molding or extrusion molding (C-1, C-2). When the molded article is cooled in a metal mold or the like, β crystals 4 of the polypropylene-based resin

are formed along the crystals 1 or 11 of the amide compound, with the result that the β crystal layer 4 of the polypropylene-based resin is highly oriented (D-1, D-2).

In contrast, the present invention is characterized in that the amide compound is dissolved in the molten polypropylene-based resin and thereby rendered amorphous in the molding step, so as to inhibit the orientation of the β crystal layer as much as possible.

The molding process of the present invention will be explained with reference to Fig. 2. First, in a molding machine, polypropylene-based resin pellets comprising columnar crystals 1 or needle crystals 11 of the amide compound and a solidified polypropylene-based resin 2 (A-1, A-2), or a dry blend of a polypropylene-based resin powder and the amide compound (not shown), is heated at a temperature not lower than the dissolution temperature of the amide compound in the molten polypropylene-based resin, and kneaded until the amide compound in a solid state is no longer observed, to dissolve the amide compound in the molten polypropylene resin. In this manner, a melt is obtained which comprises the amide compound dissolved in the molten polypropylene-based resin 3 (B-3). Subsequently, the melt is subjected to an injection and/or extrusion step of any of the above-mentioned molding methods. At this point, the amide compound is in a dissolved state in the molten polypropylene-based resin (C-3). In the subsequent cooling and crystallization step, the amide compound needle crystals 111 are formed in an unoriented state in the molten polypropylene-based resin 3 (D-3a). Then, β crystals 4 of the polypropylene-based resin are formed along the amide compound needle crystals 111, and thus a molded article is obtained in which the layer of polypropylene-based resin p crystals 4 is present in an unoriented state (D-3b).

As described above, the pellets or dry blend needs to be heated at a temperature not lower than the dissolution temperature of the amide compound of Formula (1) in the molten polypropylene-based resin, and kneaded until a solid phase amide compound no longer exists, in order to dissolve the amide compound in the molten polypropylene-based resin.

The dissolution temperature varies depending on the type and amount of the amide compound and the type of the polypropylene-based resin. Usually, when the amount of the amide compound is within the range according to the present invention (0.01 to 0.1 parts by weight), the dissolution temperature is lower than 300°C. As the amount of the amide compound increases, the dissolution temperature rises. For example, when N,N'-dicyclohexyl-2,6-naphthalenedicarboxamide is used as the β crystal nucleating agent according to the present invention in a polypropylene homopolymer, the dissolution temperature rises from about 235°C to about 240°C, then to about 245°C, about 260°C, and about 280°C, as the amount of the amide compound increases from 0.04 to 0.05, then to 0.06, 0.1, and to 0.2 parts by weight, respectively. Therefore, for example, when the amount of the amide compound is 0.04 parts by weight, the molding temperature needs to be set at 235°C or higher.

The residence time, rotation frequency of the screw, and the like during heating are adjusted to knead the resin composition until no solid phase amide compound remains.

Subsequently, while maintaining the amide compound in the dissolved state, the resin composition is subjected to the injection and/or extrusion step, and then cooled for crystallization. A high cooling temperature is desirable for forming β crystals. A preferable cooling temperature is about 40 to about 80°C, more preferably about 60 to about 80°C.

<u>Polypropylene-based resin molded article</u>

The molded article of the present invention contains unoriented β crystals of a polypropylene-based resin, and is excellent in heat-resistant rigidity and impact resistance. In particular, the molded article has a remarkably high Izod impact resistance value.

The degree of unorientation of the β crystal layer of the polypropylene-based resin in the molded article of the present invention can be evaluated in the following manner.

The β crystals of polypropylene-based resins are hexagonal crystals with (300) and (301) major crystal lattice planes. It has been difficult to find the degree of orientation of the β crystals from diffraction profiles obtained by measurement with a diffractometer (a type of X-ray diffraction equipment). The present inventors found that the β crystals, when heat-treated at a specific temperature, undergo transition to α crystals while retaining the original degree of orientation, and that the original degree of orientation can be found from the X-ray diffraction profiles of the α crystals.

The temperature for the heat treatment depends on the type of polypropylene-based resin. When the polypropylene-based resin is a polypropylene homopolymer or a polypropylene block copolymer, the heat treatment temperature is 153°C. When the resin is a polypropylene random copolymer, the heat treatment temperature is 130°C. The β crystals undergo transition to α crystals when the molded article is heat-treated in an oven at such a temperature for 30 minutes to 1 hour.

The degree of orientation was determined by the following procedure. The heat-treated molded article was subjected to wide-angle X-ray diffractometry in the three (THROUGH, EDGE, and END) directions using an X-ray diffractometer. From the obtained diffraction profiles, the diffraction peak heights of the (110) and (040) crystal lattice

planes derived from α crystals of the polypropylene-based resin were found as diffraction intensities. Next, the diffraction intensity ratio of the (040) plane to the (110) plane in each of the THROUGH, EDGE and END directions was found, and as shown in Equation (A), the product of the ratios was calculated as the degree of orientation.

$$\text{Degree of orientation}=(I_{040,th}/I_{110,th})\text{x}(I_{040,ed})I_{110,ed})\text{x}$$

$$(I_{110,en}/I_{040,en}) \qquad (A)$$

where $I_{040,th}$ and $I_{110,th}$ are the diffraction peak intensities of the (040) and (110)planes, respectively, in the diffraction profile in the THROUGH direction; $I_{040,ed}$ and $I_{110,ed}$ are the diffraction peak intensities of the (040) and (110) planes, respectively, in the diffraction profile in the EDGE direction; and $I_{110,en}$ and $I_{040,en}$ are the diffraction peak intensities of the (110) and (040) planes, respectively, in the diffraction peak profile in the END direction.

The smaller the degree of orientation of the original molded article before heat treatment, the closer the product is to 1. On the contrary, the larger the degree of orientation, the farther the product is from 1. The degree of orientation of the unoriented molded article according to the present invention is 0.8 to 1.2, preferably 0.9 to 1.1, as calculated from Equation (A).

The molded article of the present invention thus obtained contains a large proportion of unoriented β crystals of the polypropylene-based resin, and has an excellent impact resistance. The β crystal content in the molded article is preferably high to improve the impact resistance, and is at least 20%, preferably at least 30%, more preferably at least 40%, as determined from the ratio of the heat of fusion of β crystals to the total heat of fusion of α crystals and β crystals.

When the present invention is applied to a polypropylene-based resin, such as a polypropylene homopolymer, the Izod impact resistance value of the resin is improved about 2 to about 6 or more times higher than the case where the present invention is not applied. Accordingly, the present invention will find applications in various industries that especially require a high impact resistance, such as automotive parts, mechanical engineering parts, and household electrical appliance parts.

## BRIEF DESCRIPTION OF THE DRAWINGS

Fig. 1 is a diagram showing a prior art molding process.
Fig. 2 is a diagram showing the molding process of the present invention.
Fig. 3 is a perspective view showing the directions of the wide-angle X-ray diffractometry of the molded article according to the present invention.
Fig. 4 is the X-ray diffraction profile in the THROUGH direction obtained by the wide-angle X-ray diffractometry, and shows the diffraction intensities of the planes (110) and (040) in the profile.

<Explanation of numerals>

| | |
|---|---|
| 1 | Columnar crystals of the amide compound represented by Formula (1) |
| 11 | Needle crystals of the amide compound represented by Formula (1) |
| 111 | Unoriented crystals of the amide compound represented by Formula (1) |
| 2 | Solidified polypropylene-based resin |
| 3 | Molten polypropylene-based resin |
| 4 | β crystals of the polypropylene-based resin |

## BEST MODE FOR CARRYING OUT THE INVENTION

Examples and Comparative Examples are provided below to illustrate the present invention in detail. The following methods were employed to determine the dissolution temperature of the amide compound (β crystal nucleating agent) in the molten polypropylene-based resin, and the modulus of elasticity in bending, heat distortion temperature, DuPont impact strength, Izod impact strength, β crystal content and degree of orientation of the molded article.

Dissolution temperature

Resin pellets subjected to injection molding were observed with an optical microscope equipped with a heating device, while being heated at a rate of 10°C/min, to find the temperature at which the crystals of the amide compound dissolve in the molten polypropylene-based resin.

Modulus of elasticity in bending

According to ASTM D790, the modulus of elasticity in bending of test pieces was measured at 25°C.

Heat distortion temperature

According to JIS K 7207, the heat distortion temperature of test pieces was measured at a load of 4.6 kgf/$cm^2$. The higher the heat distortion temperature, the better the heat resistant rigidity.

DuPont impact strength

A drop impact test according to JIS K 7211 was performed to determine the 50% breaking energy of test pieces (2 mm-thick injection-molded sheets) at 23°C.

Izod impact strength

According to ASTM D256, the notched and unnotched impact strengths of test pieces obtained by injection molding were determined.

β crystal content

Test pieces (1.0 mm-thick injection-molded sheets) were cut into a suitable size, and subjected to differential scanning calorimetry (DSC) in a nitrogen atmosphere at a heating rate of 20°C/min. The β crystal content was calculated from the heat of fusion of α crystals and β crystals obtained from the DSC thermogram, by the following equation:

$$\beta \text{ crystal content (\%)} = 100x[(H\beta/(H\alpha+H\beta))$$

where Hβ is the heat of fusion of the β crystals, and Hα is the heat of fusion of the α crystals.

Degree of orientation

The test pieces for testing the modulus of elasticity in bending were cut on the centerline perpendicular to the direction of the resin flow during molding. The cut pieces were heat-treated in a hot-air oven at 153°C for 1 hour to cause transition from β crystals to α crystals, and then subjected to wide-angle X-ray diffractometry in the THROUGH, EDGE and END directions using a diffractometer.

From the obtained diffraction profiles, the diffraction peak heights of the (110) and (040) plane derived from the polypropylene α crystals were determined as the diffraction intensities. Then, the diffraction intensity ratio of the plane (040) to the plane (110) plane in each of the three directions (the THROUGH, EDGE and END directions) was found. The degree of orientation was calculated from the obtained diffraction intensity ratios, according to Equation (A). The smaller the degree of orientation, the closer the resulting value is to 1, and the larger the degree of orientation, the farther the value is from 1. Fig. 3 shows the directions of X-ray diffractometry with respect a test piece. Fig. 4 shows an X-ray diffraction profile and an example of diffraction intensity calculation.

$$\text{Degree of orientation} = (I_{040,th}/I_{110,th}) \times (I_{040,ed}/I_{110,ed}) \times (I_{110,en}/I_{040,en}) \quad (A)$$

wherein $I_{040,th}$ and $I_{110,th}$ are the diffraction peak intensities of the (040) and (110) planes, respectively, in the diffraction profile in the THROUGH direction; $I_{040,ed}$ and $I_{110,ed}$ are the diffraction peak intensities of the (040) and (110) planes,

respectively, in the diffraction profile in the EDGE direction; and $I_{110,en}$ and $I_{040,en}$ are the diffraction peak intensities of the (110) and (040) planes, respectively, in the diffraction profile in the END direction.

Example 1

N,N'-dicyclohexyl-2,6-naphthalenedicarboxamide as a β crystal nucleating agent (0.04 parts by weight), Irganox 1010 (tradename, product of Ciba Specialty Chemicals) as an oxidation stabilizer (0.05 parts by weight), and Irgafos 168 (tradename, product of Ciba Specialty Chemicals) (0.05 parts by weight) were mixed with a propylene homopolymer with a MFR of 2.0 g/10 min (100 parts by weight), using a Henschel mixer. The resulting mixture was melted, kneaded and extruded at 250°C, and then cooled and cut to prepare β-nucleating agent-containing resin pellets.

The resin pellets were heated at 250°C to dissolve the amide compound in the molten propylene homopolymer, and the melt was injection-molded at a mold temperature of 80°C. In this manner, several types of test pieces were obtained and tested for the above properties. Table 1 presents the results.

Complete dissolution of the amide compound in the molten polypropylene was confirmed by visually observing the transparency of the molten resin discharged from the nozzle tip of the heating cylinder of the injection-molding machine.

Example 2

Test pieces were prepared in the same manner as in Example 1 except that the β crystal nucleating agent was used in an amount of 0.05 parts by weight. The test pieces were tested for the properties. Table 1 presents the results.

Example 3

Test pieces were prepared in the same manner as in Example 1 except that the β crystal nucleating agent was used in an amount of 0.06 parts by weight. The test pieces were tested for the properties. Table 1 presents the results.

Example 4

Test pieces were prepared in the same manner as in Example 1 except that the mixture was melted, kneaded and extruded at 200°C to prepare the resin pellets, and that the resin pellets were heated at 260°C for injection molding. The test pieces were tested for the properties. Table 1 presents the results.

Example 5

Test pieces were prepared in the same manner as in Example 1 except that the β crystal nucleating agent is used in an amount of 0.1 parts by weight, and that the resin pellets were heated at 280°C for injection molding. The test pieces were tested for the properties. Table 1 presents the results.

Example 6

Test pieces were prepared in the same manner as in Example 1 except that a propylene homopolymer with a MFR of 10 g/10 min was used in place of the propylene homopolymer used in Example 1. The test pieces were tested for the properties. Table 1 presents the results.

Comparative Example 1

Test pieces were prepared in the same manner as in Example 1 except that the β crystal nucleating agent was not used. The test pieces were tested for the properties. Table 1 presents the results.

Comparative Example 2

Test pieces were prepared in the same manner as in Comparative Example 1 except that the resin pellets were heated at 200°C for injection molding. The test pieces were tested for the properties. Table 1 presents the results.

Comparative Example 3

Test pieces were prepared in the same manner as in Example 1 except that the resin pellets were heated at 200°C for injection molding. The test pieces were tested for the properties. Table 1 presents the results.

Comparative Example 4

Test pieces were prepared in the same manner as in Example 2 except that the resin pellets were heated at 200°C for injection molding. Then, the test pieces were tested for the properties. Table 1 presents the results.

Comparative Example 5

Test pieces were prepared in the same manner as in Example 3 except that the resin pellets were heated at 200°C for injection molding. The test pieces were tested for the properties. Table 1 presents the results.

Comparative Example 6

Test pieces were prepared in the same manner as in Example 1 except that the mixture was melted, kneaded, and extruded at 200°C to prepare the resin pellets, and that the resin pellets were heated at 250°C for injection molding. The test pieces were tested for the properties. Table 1 presents the results. In Comparative Example 6, the amide compound did not completely dissolve in the molten polypropylene-based resin. This matter was confirmed by visually observing the turbidity of the molten resin discharged from the nozzle tip of the cylinder.

Comparative Example 7

Test pieces were prepared in the same manner as in Example 5 except that the β crystal nucleating agent was used in an amount of 0.2 parts by weight. The test pieces were tested for the properties. Table 1 presents the results.

Comparative Example 8

The test pieces were prepared in the same manner as in Example 6 except that the β-nucleating agent was not used. The test pieces were tested for the properties. Table 1 presents the results.

Comparative Example 9

Test pieces were prepared in the same manner as in Example 6 except that the resin pellets were heated at 200°C for injection molding. The test pieces were tested for the properties. Table 1 presents the results.

Table 1

| | | MFR | Nucleating agent | Melting and kneading temperature* | Resin temperature during molding | State of molten resin during molding | Dissolution temperature |
|---|---|---|---|---|---|---|---|
| | | g/10min | Parts by weight | °C | °C | | °C |
| Example | 1 | 2 | 0.04 | 250 | 250 | Transparent | 235 |
| | 2 | 2 | 0.05 | 250 | 250 | Transparent | 240 |
| | 3 | 2 | 0.06 | 250 | 250 | Transparent | 245 |
| | 4 | 2 | 0.04 | 200 | 260 | Transparent | 235 |
| | 5 | 2 | 0.1 | 250 | 280 | Transparent | 260 |
| | 6 | 10 | 0.04 | 250 | 250 | Transparent | 235 |
| Comparative Example | 1 | 2 | 0 | 250 | 250 | Transparent | - |
| | 2 | 2 | 0 | 250 | 200 | Transparent | - |
| | 3 | 2 | 0.04 | 250 | 200 | Turbid | 235 |
| | 4 | 2 | 0.05 | 250 | 200 | Turbid | 240 |
| | 5 | 2 | 0.06 | 250 | 200 | Turbid | 245 |
| | 6 | 2 | 0.04 | 200 | 250 | Turbid | 235 |
| | 7 | 2 | 0.2 | 250 | 280 | Turbid | 280 |
| | 8 | 10 | 0 | 250 | 250 | Transparent | - |
| | 9 | 10 | 0.04 | 250 | 200 | Turbid | 235 |

* Temperature during kneading and melting for preparation of pellets

Table 1 (continued)

| | | Modulus of elasticity in bending | Heat distortion temperature | DuPont impact strength | Izod impact strength | | β crystal content | Degree of orientation |
|---|---|---|---|---|---|---|---|---|
| | | | | | Notched | Unnotched | | |
| | | kg/mm$^2$ | °C | J | KJ/m$^2$ | KJ/m$^2$ | % | |
| Example | 1 | 109 | 132 | 1.4 | 13 | 200 or more | 45 | 1.0 |
| | 2 | 115 | 132 | 1.5 | 13 | 200 or more | 50 | 1.1 |
| | 3 | 119 | 132 | 1.6 | 12 | 200 or more | 55 | 1.1 |
| | 4 | 110 | 132 | 1.4 | 13 | 200 or more | 45 | 1.1 |
| | 5 | 124 | 133 | 1.7 | 11 | 200 or more | 58 | 1.2 |
| | 6 | 116 | 130 | 1.5 | 5.0 | 123 | 50 | 1.1 |
| Comparative Example | 1 | 122 | 105 | 0.34 | 3.1 | 68 | 0 | 1.5 |
| | 2 | 134 | 107 | 0.30 | 3.9 | 67 | 0 | 2.1 |
| | 3 | 167 | 134 | 0.25 | 2.3 | 98 | 40 | 1.6 |
| | 4 | 171 | 134 | 0.22 | 2.2 | 94 | 45 | 1.8 |
| | 5 | 172 | 134 | 0.19 | 2.2 | 92 | 50 | 2.0 |
| | 6 | 125 | 133 | 1.20 | 8 | 112 | 45 | 1.4 |
| | 7 | 126 | 133 | 1.70 | 6.2 | 116 | 60 | 1.6 |
| | 8 | 133 | 105 | 0.27 | 2.3 | 48 | 0 | 1.3 |
| | 9 | 180 | 134 | 0.20 | 2.0 | 10 | 55 | 2.0 |

According to the present invention, a crystalline polypropylene-based resin molded article can be produced which has an excellent impact resistance, in particular, a remarkably high Izod impact strength.

## Claims

**1.** A polypropylene-based resin molded article with an excellent impact resistance, obtained by molding a polypropylene-based resin composition containing 0.01 to 0.1 parts by weight of at least one amide compound represented by Formula (1) as a β crystal nucleating agent per 100 parts by weight of a polypropylene-based resin, the β crystals of the polypropylene-based resin being unoriented:

$$R^2\text{-NHCO-}R^1\text{-CONH-}R^3 \qquad (1)$$

wherein $R^1$ is a $C_{1-24}$ saturated or unsaturated aliphatic dicarboxylic acid residue, a $C_{4-28}$ saturated or unsaturated alicyclic dicarboxylic acid residue, or a $C_{6-28}$ aromatic dicarboxylic acid residue; and $R^2$ and $R^3$ are the same or different and each represent a $C_{3-18}$ cycloalkyl group or a group represented by Formula (a), (b), (c) or (d):

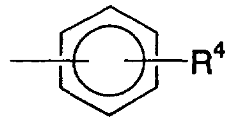
(a)

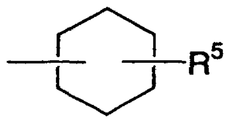
(b)

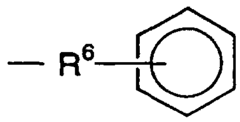
(c)

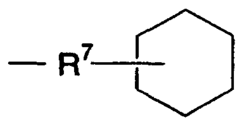
(d)

wherein $R^4$ is a hydrogen atom, a $C_{1-12}$ linear or branched alkyl group, a $C_{6-10}$ cycloalkyl group or a phenyl group; $R^5$ is a $C_{1-12}$ linear or branched alkyl group; and $R^6$ and $R^7$ are the same or different and each represent a $C_{1-4}$ linear or branched alkylene group.

**2.** A polypropylene-based resin molded article according to Claim 1, wherein, in Formula (1), $R^1$ is a $C_{4-28}$ saturated or unsaturated alicyclic dicarboxylic acid residue or a $C_{6-28}$ aromatic dicarboxylic acid residue; and $R^2$ and $R^3$ are the same or different and each represent a $C_{3-18}$ cycloalkyl group or a group represented by Formula (a), (b), (c) or (d).

**3.** A polypropylene-based resin molded article according to Claim 1, wherein, in Formula (1), $R^1$ is a $C_{6-28}$ aromatic dicarboxylic acid residue, and $R^2$ and $R^3$ are the same or different and each represent a $C_{3-18}$ cycloalkyl group or a group represented by Formula (b).

**4.** A polypropylene-based resin molded article according to Claim 1, wherein the amide compound has a melting point of 200°C or higher.

**5.** A polypropylene-based resin molded article according to Claim 1, wherein the amide compound is N,N'-dicyclohexyl-2,6-naphthalenedicarboxamide.

**6.** A polypropylene-based resin molded article according to Claim 1, wherein, after transition of the β crystals in the molded article to α crystals by heat treatment, the diffraction peak intensities of the (110) and (040) crystal lattice planes in diffraction profiles of the heat-treated molded article measured in the THROUGH, EDGE and END directions by wide-angle X-ray diffractometry using an X-ray diffractometer satisfy the following equation (A):

$$0.8 \leq (I_{040,th}/I_{110,th}) \times (I_{040,ed}/I_{110,ed}) \times (I_{110,en}/I_{040,en}) \leq 1.2 \quad (A)$$

wherein $I_{040,th}$ and $I_{110,th}$ are the diffraction peak intensities of the (040) and (110) planes, respectively, in the diffraction profile in the THROUGH direction; $I_{040,ed}$ and $I_{110,ed}$ are the diffraction peak intensities of the (040) and (110) planes, respectively, in the diffraction profile in the EDGE direction; and $I_{110,en}$ and $I_{104,en}$ are the diffraction peak intensities of the (110) and (040) planes, respectively, in the diffraction profile in the END direction.

**7.** A process for producing a polypropylene-based resin molded article according to Claim 1, comprising the steps of:

kneading a polypropylene-based resin composition containing 0.01 to 0.1 parts by weight of at least one amide compound represented by Formula (1) per 100 parts by weight of a polypropylene-based resin, at a temperature not lower than the dissolution temperature of the amide compound in the polypropylene-based resin in a molten state, until the amide compound dissolves in the molten polypropylene-based resin; and
molding the composition in such a state that the amide compound has dissolved in the molten polypropylene resin, by injection and/or extrusion.

Fig.1

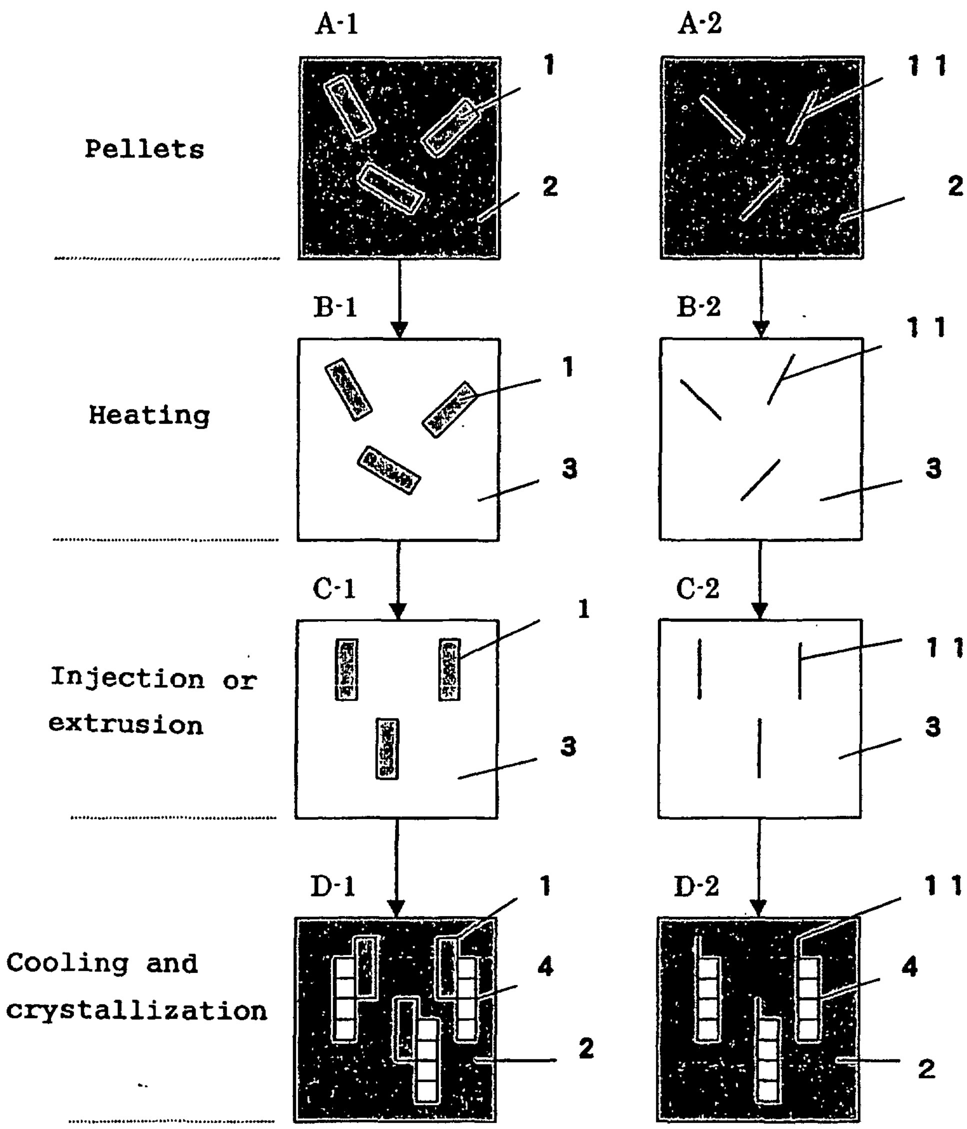
A-1
A-2
1
1 1
Pellets
2
2
B-1
B-2
1 1
1
Heating
3
3
C-1
C-2
1
Injection or
extrusion
1 1
3
3
D-1
D-2
1
1 1
Cooling and
crystallization
4
4
2
2

**Fig.2**

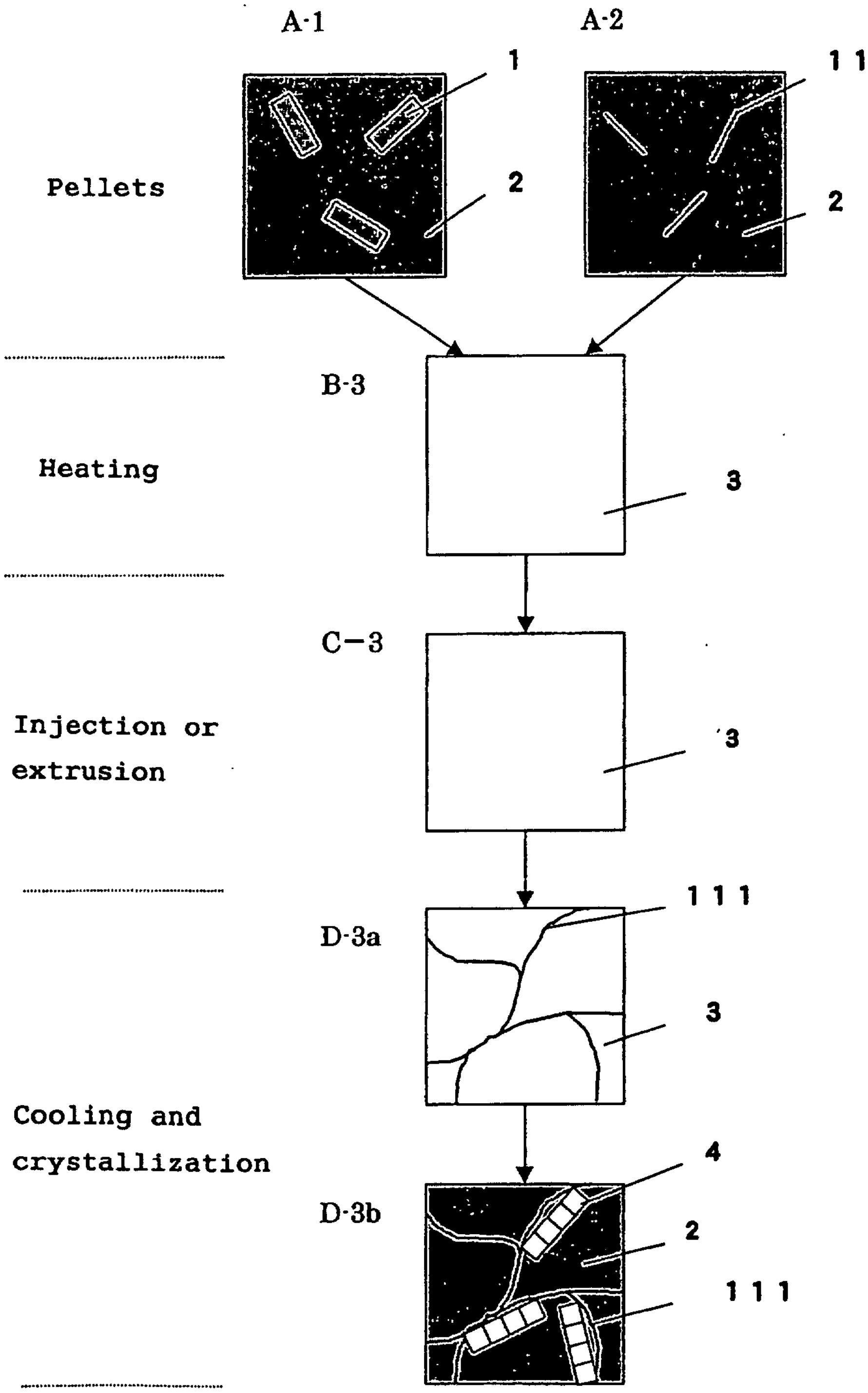
A-1
A-2
1
11
Pellets
2
2
B-3
Heating
3
C−3
Injection or
extrusion
3
111
D-3a
3
Cooling and
crystallization
4
D-3b
2
111

Fig.3

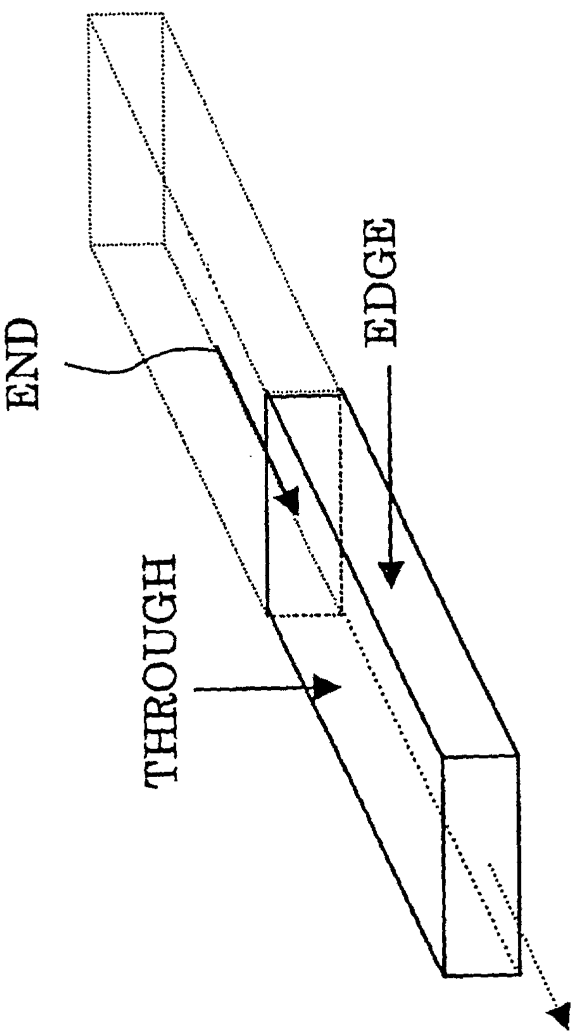


Direction of resin flow during molding

Fig.4

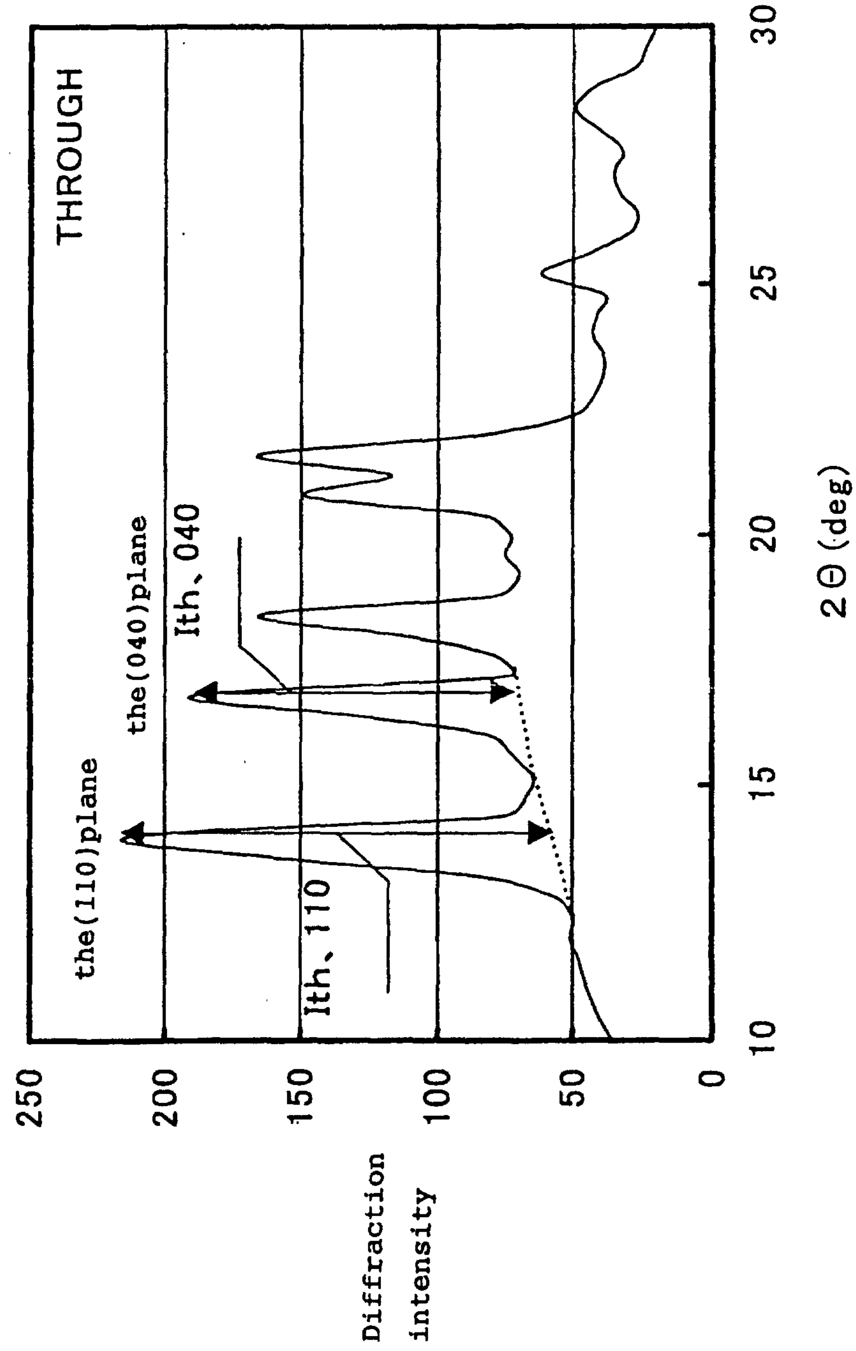
THROUGH
the(110)plane
the(040)plane
Ith、110
Ith、040
Diffraction intensity
250
200
150
100
50
0
10
15
20
25
30
2Θ(deg)

## INTERNATIONAL SEARCH REPORT

International application No.
PCT/JP02/08909

A. CLASSIFICATION OF SUBJECT MATTER
Int.Cl$^7$ C08J5/00, C08L23/10, B29B13/00

According to International Patent Classification (IPC) or to both national classification and IPC

B. FIELDS SEARCHED

Minimum documentation searched (classification system followed by classification symbols)
Int.Cl$^7$ C08J5/00, C08L23/00-23/36, B29B13/00

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 8-100088 A (NEW JAPAN CHEMICAL CO., LTD.), 16 April, 1996 (16.04.96), Claims; Par. Nos. [0040] to [0042] (Family: none) | 1-7 |
| A | EP 557721 A2 (NEW JAPAN CHEMICAL CO., LTD.), 01 September, 1993 (01.09.93), Examples; Claims & JP 5-262936 A & JP 5-310665 A & JP 6-107875 A & EP 557721 A3 & EP 557721 B1 & KR 242873 B1 & US 6235823 B1 & KR 266916 B1 & JP 3243835 B2 | 1-7 |
| A | JP 8-197640 A (Mitsubishi Chemical Corp.), 06 August, 1996 (06.08.96), Claims; Par. Nos. [0004], [0046] to [0055] (Family: none) | 1-7 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 November, 2002 (21.11.02) | 03 December, 2002 (03.12.02) |
| Name and mailing address of the ISA/ Japanese Patent Office | Authorized officer |
| Facsimile No. | Telephone No. |

Form PCT/ISA/210 (second sheet) (July 1998)

INTERNATIONAL SEARCH REPORT

International application No.
PCT/JP02/08909

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-134227 A (Mitsubishi Chemical Corp.), 28 May, 1996 (28.05.96), Claims; Par. Nos. [0004], [0034] to [0041] (Family: none) | 1-7 |

Form PCT/ISA/210 (continuation of second sheet) (July 1998)